# EUROPEAN PATENT APPLICATION

(11) **EP 1 982 788 A1**
(43) Date of publication of application: **22.10.2008**
(21) Application number: 08154647.5
(22) Date of filing: 16.04.2008
(51) Int. Cl.: B23K 9/32, H01R 13/00, H01R 13/631, H01R 13/641, H01R 13/645, H05H 1/34

(54) **Connecting device with alignment means for complementary and/or compatible connection**

(30) Priority: 17.04.2007 IT BO20070279
(71) Applicant: Tec.Mo S.r.l., 40067 Rastignano (Bologna) (IT)
(72) Inventor: Bassi, Giorgio, 40067 Rastignano (BO) (IT)
(74) Representative: Negrini, Elena

(57) **Abstract**

A connecting device (1) having a female member (2) and a male member (7) movable between a mutual connecting condition and a mutual detaching condition, the female member (2) is provided with a plurality of concavities, at least some of them are fit to removably house protrusions (5,6) of a male member (7) in order to guarantee electric and/or pneumatic connections in the connecting condition, said female member (2) and male member (7) are also equipped with respectively female and male (9) alignment means fit to allow the connecting condition of the members (2,7) in an unique mutual connecting position.

The female alignment means comprises a shaped cavity in order to allow only the insertion of the male alignment means (9) having a protrusion which is almost complementary and/or compatible with said shaped cavity.

## Description

The present invention relates to connections and refers to a connecting device particularly fit for connecting plasma and welding torches to the respective generators.

There are known connecting devices of standard type which allow to connect torches for plasma cutting or for welding or other tools, to generators able to provide the electric, pneumatic power and/or other kind of power to said tools.

A drawback of said connecting devices consists in that they allow to connect a generator also to tools which are not compatible with said generator; said operation does not conform with the safety norms of many countries and causes risks for the safety of the operators and for the integrity of the tools and generators.

Other drawback of said known devices consists in that they allow to connect generators and torches of different brands.

An object of the present invention is to provide a connecting device which can allow the connection of a generator only to the tools which are compatible therewith and vice versa.

Other object is to provide a connecting device that prevents the connection between the tools and power supplies of different brands or of different standards.

Further object is to provide a connecting device which can be compatible with the known standard devices for example to allow the connection of torches provided with a male member of the device of the invention with generators provided with a female member of the known standard devices.

The above mentioned objects are obtained in accordance with the content of the claims.

The characteristics of the present invention are highlighted in the followings with particular reference to the attached drawings, in which:
- figure 1 shows an axonometric side view of the connecting device in a condition next to the mutual connection of its male member on the left, and female member on the right;
- figure 2 shows a longitudinal section view of the device of figure 1;
- figure 4 shows an axonometric view of a female member of the device of figure 1;

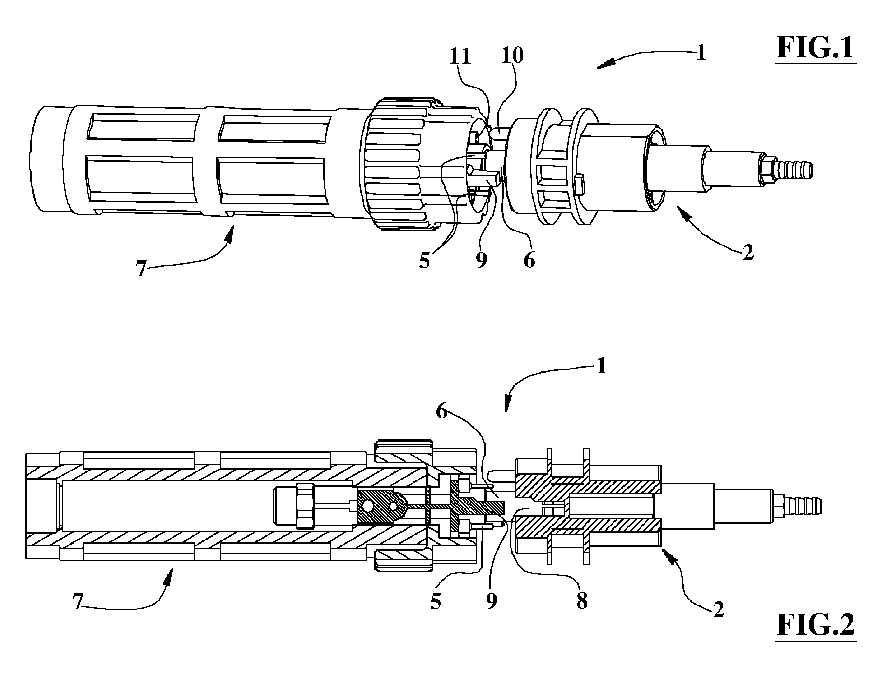

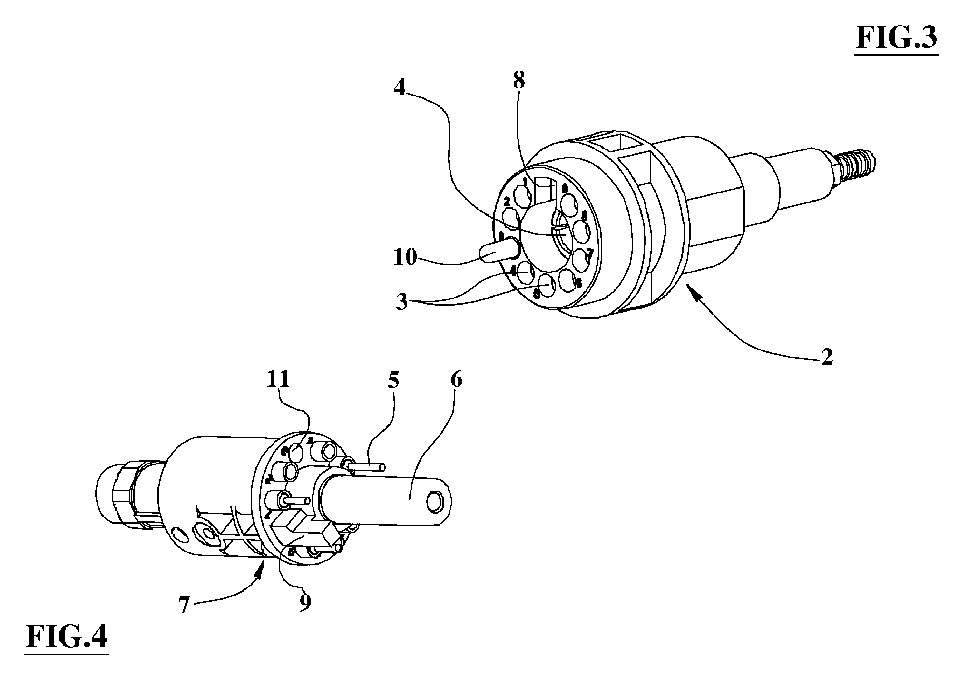

- figures 3 and 4 show axonometric views respectively of the female member and a part of the male member of figure 1;

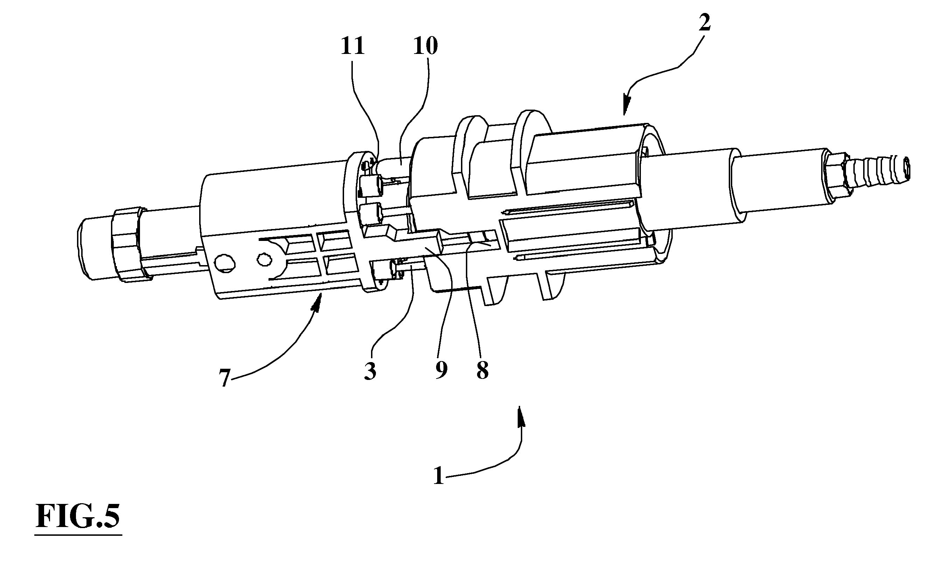

- figure 5 shows an axonometric view of female member and male member of figures 3 and 4 partially connected and sectioned by a plane decentralized and parallel respect to their longitudinal axis.

With reference to the figures 1 - 5, numeral 1 indicates the connecting device of the present invention.

The device 1 is constituted by a female member 2 associated to a generator, in particular fixed to a wall, not shown, of said generator and connected to the outlets and/or ports of this latter, and by a male member 7 which is associated with a tool, such as a plasma torch, and is connected to the outlets and ports of said tool.

The female member female 2 is blocked, by means of threaded means or clamping means, on a wall of the generator and the male member is fixed to the end of the connecting cable of the torch.

The female members 2 and the male members 7 are movable between a mutual connecting condition and a mutual detaching condition

The female member 2 is provided with a plurality of concavities 3, 4 which are parallel in respect to the axis of the member. A set of said concavities 3, internally equipped with female electric connectors or arranged for said connectors, is disposed on a circumference. In the centre of said circumference there is a concavity with a kind of female electric connector for high amperage and/or a pneumatic type of female connector.

The male member 7 is provided with a plurality of protrusions 5, 6 which are parallel in respect to the axis of the member. A set of said protrusions 5, consisting of male electric connectors, is displaced on a circumference. In the centre of said circumference, there is a protrusion 6 of male electric connector for high amperage and/or a pneumatic type of male connector.

In the connecting condition, the protrusions are engaged in the concavities to guarantee the electrical and/or pneumatic connections between generator and torch.

In order to guarantee the correct electric and/or pneumatic connections in the connecting condition, the female member 2 and the male member 7 are also equipped with respectively female alignment means 8 and male alignment means 9 fit to allow the connecting condition of the members 2, 9 in an unique mutual connecting position.

The female alignment means 8 comprises a shaped cavity, with rectangular transversal and longitudinally variable sections, to allow only the insertion of male alignment means 9 having a protrusion almost complementary and/or compatible with said shaped cavity, which has as well rectangular transversal and longitudinally variable sections.

The most internal portions of the cavity of the female alignment means 8 and the most external portion of protrusion of the male alignment means 9 have smaller sections in comparison with the respective opposite portions.

At least a first side of each female 8 and male 9 alignment means is shaped having two flat portions, almost parallel, staggered and linked together by a tilted intermediate portion.

The invention provides also that each female alignment means 8 and each male alignment means 9 is equipped with a second shaped side.

Each shaped side of the female alignment means 8 corresponds to a respective shaped side of the male alignment means 9.

The positions of the shaped sides in female 8 and male 9 alignment means and the position of the inclined intermediate portion of the shaped sides correspond to different compatibilities of the apparatuses connected to the female and male members. In other words, the shapings of the female 8 and male 9 alignment means allow or prevent the mutual connection of the members according to the compatibility of the generator and of the torch to which are connected. It is also possible to use a shaped side of the female 8 and the male 9 alignment means to prevent the connection of generators and torches of different brands.

In order to increase the number of possible or impracticable connections, the invention provides furthermore that the female member 2 is equipped with at least a pin 10 and the male member 7, connected to an apparatus which is compatible to the apparatus connected to the female member 2, has a corresponding hole 11 whose size is equal to or bigger than the size of the pin 10 and fit to house said pin in the connecting condition.

Obviously, the female member 2 can be equipped with of a set of pins 10 and the male member 7 can have a plurality of holes 11 for pins.

Said pins and holes can be positioned in the predicted positions for unutilized concavity 3 and protrusions 5.

The roles 11 can be equipped with female connectors for the connection, by means of the respective pins 10, for example, with detectors, with sensors or with identification means of the torch.

In the connecting condition, the longitudinal axis of the device 1 is parallel in respect to the longitudinal axes of concavities 3, 4, of protrusions 5, 6, of the female 8 and male 9 alignment means, of the pins 10 and of the holes 11.

The operation of the device 1 provides, for example, to allow the connection to a generator which provides a certain electric power of torches adapted to said power or to a bigger powers to prevent the torches connection at lower power than the power distributed from the generator. In alterative or additionally, the operation of the device prevents the connection between generators and torches of different brands or different standards.

An advantage of the present invention is to provide a connecting device which can allow the connection of a generator only with tools which are compatible with generator and vice versa.

Other advantage is to provide a connecting device which prevents the connection between tools and power supplies of different brands and different standards.

Further advantage is to provide a connecting device which are compatible with the standard known devices, for example, in order to allow the connection of torches equipped with a male member of the device of the invention with generators equipped with a female member of the standard known devices.

## Claims

1. Connecting device (1) having a female member (2) and a male member (7) movable between a mutual connecting condition and a mutual detaching condition, the female member (2) is provided with a plurality of concavities (3, 4), at least some of them are fit to removably house protrusions (5, 6) of a male member (7) in order to guarantee electric and/or pneumatic connections in the connecting condition, said female member (2) and male member (7) are also equipped with respectively female (8) and male (9) alignment means fit to allow the connecting condition of the members (2, 9) in an unique mutual connecting position; said device (1) being **characterized in that** the female alignment means (8) comprises a shaped cavity in order to allow the insertion only of the male alignment means (9) having a protrusion which is almost complementary and/or compatible with said shaped cavity.

2. Device according to claim 1 **characterized in that** the most internal portion of the female alignment means (8) and the most external portion of the male alignment means (9) have smaller sections than the sections of the respective opposite portions.

3. Device according to claim 1 or claim 2 **characterized in that** the transversal sections of the female (8) and male (9) alignment means are rectangular shaped.

4. Device according to claim 3 **characterized in that** at least a first side of each female (8) and male (9) alignment means is shaped having two flat portions, almost parallel, staggered and linked together by a tilted intermediate portion.

5. Device according to claim 4 **characterized in that** each female alignment means (8) and male alignment means (9) is equipped with a second shaped side.

6. Device according to claim 4 or claim 5 **characterized in that** each shaped side of the female alignment means (8) correspond to a respective shaped side of the male alignment means (9).

7. Device according to any of the previous claims **characterized in that** the positions of the shaped sides in the female (8) and male (9) alignment means and the position of the tilted intermediate portion of the shaped sides correspond to different compatibilities of the apparatuses connected to the female and male members.

8. Device according to claim 1 **characterized in that** the female member (2) is equipped with at least a pin (10) and the male member (7), connected to an apparatus which is compatible with the apparatus connected to the female member (2), having at least a hole (11) whose size is equal to or bigger than the size of the pin (10) and fit to house said pin in connecting condition

9. Device according to claim 8 **characterized in that** the female member (2) is equipped with a set of pins (10) and the male member (7) has a plurality of holes (11) for pins.

10. Device according to any of the previous claims **characterized in that** it has, in the connecting condition, a longitudinal axis which is parallel in respect to the longitudinal axes of the concavities (3, 4), of the protrusions (5, 6), of the female (8) and male (9) alignment means, of the pins (10) and of the holes (11).

11. Device according to any of the previous claims **characterized in that** the female member (2) is associated with a generator and is connected to the outlets and ports of the generator, and the male member (7) is associated to a tool, such as plasma torch, and is connected to the outlets and ports of said tool which is compatible with the generator.
